Europäisches Patentamt

European Patent Office

Office européen des brevets

(11) Veröffentlichungsnummer: **0 216 985**
**A2**

## (12) EUROPÄISCHE PATENTANMELDUNG

(21) Anmeldenummer: 86104575.5

(22) Anmeldetag: 03.04.86

(51) Int. Cl.⁴: **F27B 9/06** , F27B 9/34

(30) Priorität: 02.10.85 DE 3535096

(43) Veröffentlichungstag der Anmeldung:
08.04.87 Patentblatt 87/15

(84) Benannte Vertragsstaaten:
**BE DE FR GB IT NL**

(71) Anmelder: **BROWN, BOVERI & CIE**
**Aktiengesellschaft**
**Kallstadter Strasse 1**
**D-6800 Mannheim 31(DE)**

(72) Erfinder: **Mertens, Manfred, Dipl.-Ing.**
**Rilkeweg 7**
**D-4714 Selm-Bork(DE)**
Erfinder: **Faber, Wolfgang**
**Am Stadtgarten 56**
**D-4355 Waltrop I.W(DE)**
Erfinder: **Mauve, Hans Werner**
**Am Nierhof 16**
**D-4670 Lünen(DE)**

(74) Vertreter: **Kempe, Wolfgang, Dr. et al**
**c/o BROWN, BOVERI & CIE AG ZPT Postfach**
**351**
**D-6800 Mannheim 31(DE)**

(54) **Wärmeisolierung für einen Induktions-Durchlauferwärmer.**

(57) Um die Wärmeverluste zwischen zwei Induktionsspulen (10,11) eines Induktions-Durchlauferwärmers gering zu halten, wird eine Isolierplatte - (24) unterhalb der Transportbahn (23) montiert. Eine zwischen den Induktionsspulen angeordnete Tragwalze ist als Kammwalze (13) ausgebildet. Die Isolierplatte (24) weist Ausnehmungen (29) auf durch die Segmente (30) der Scheiben (15) der Kammwalze (13) nach oben bis zur Transportbahn (23) herausragen.

EP 0 216 985 A2

Fig. 2

0 216 985

### Wärmeisolierung für einen Induktions-Durchlauferwärmer

Die Erfindung betrifft eine Wärmeisolierung für einen Induktions-Durchlauferwärmer für stangenförmiges Material, insbesondere für Brammen, wobei der Induktions-Durchlauferwärmer wenigstens zwei Induktionsspulen mit wenigstens einer zwischen den Spulen angeordneten Tragwelle oder -walze enthält. Die Wärmeisolierung soll den Zwischenbereich der beiden Induktionsspulen abdecken.

Insbesondere bei Erwärmern großer Leistung spielt die Isolierung der Zwischenräume zwischen den Induktionsspulen (Induktionsöfen) eine wesentliche Rolle für die Wärmebilanz. Ferner kann eine Zwischenraumisolierung zur Vergleichmäßigung der Temperatur des durchlaufenden stangenförmigen Materials beitragen. Diese Anforderungen sind bisher nur in begrenztem Maße erfüllbar, da im Bereich der Tragrollen oder -walzen keine Wärmeisolierung bekannt ist. Bei Isolierung des Zwischenraumes nach oben und zu den Seiten hin, die prinzipiell keine Schwierigkeiten bereiten sollte, ergibt sich in der Regel zwar auch - schon eine erhebliche Energiereduzierung, jedoch kann sich durch die stärkere Abkühlung nach unten (Wärmestrahlung und dergl.) der untere Teil des stangenförmigen Materials stärker abkühlen als dessen oberer Teil. Diese Temperaturunterschiede können ein Durchbiegen (Aufwölbung nach oben) des stangenförmigen Materials zur Folge haben. Um eine Beschädigung der Spulen zu vermeiden, sind infolge der Durchbiegung größere Spulendurchtrittsquerschnitte erforderlich, was wiederum einen erhöhten Energieverbrauch zur Folge hat.

Der Erfindung liegt die Aufgabe zugrunde, eine Wärmeisolierung der eingangs genannten Art zu - schaffen, die es ermöglicht, den Raum zwischen den Induktionsspulen nach allen Seiten hin etwa gleichgut zu isolieren. Insbesondere soll eine Isolierung angegeben werden, die eine Abkühlung nach unten weitgehend verhindert. Durch die Isoliermaßnahmen darf der Transport des zu erwärmenden stangenförmigen Materials nicht beeinträchtigt werden.

Die Aufgabe wird dadurch gelöst, daß die Tragwelle oder -walze als Kammwalze ausgebildet ist, daß zwischen der Welle der Kammwalze und der Transportbahn des stangenförmigen Materials wenigstens eine Isolierplatte angeordnet ist, und daß die Isolierplatte Ausnehmungen aufweist, durch die Segmente der Scheiben der Kammwalze nach oben herausragen.

Vorzugsweise stützen sich die Isolierplatten auf an den Induktionsspulen befestigten Leisten ab. Die Leisten können in zweckmäßiger Weise durch an den Induktionsöfen angeformte Stufen gebildet sein.

Die Erfindung umfaßt auch die Wärmeisolierung für Induktions-Durchlauferwärmer, bei denen der abzudeckende Bereich nicht den gesamten Zwischenraum zwischen zwei Induktionsspulen umfaßt oder statt durch zwei Induktionsspulen durch andere Vorrichtungen definiert und/oder begrenzt wird.

Vorzugsweise ist die Isolierplatte segmentartig ausgebildet, wobei die Segmentlänge in etwa gleich dem Abstand zwischen den Induktionsöfen ist und die Segmentbreite in etwa gleich dem Scheibenabstand der Kammwalze ist. Bei derartigen Isolierplattensegmenten lassen sich die Wärmespannungen gering halten. Sie lassen sich insbesondere im Störungsfall relativ leicht handhaben. Bei Beschädigung braucht lediglich ein Teil der Gesamtisolierung ausgewechselt zu werden.

Es ist zweckmäßig, die Trennungslinie zwischen zwei aneinanderliegenden Segmenten in etwa in Scheibenmitte der Kammwalzenscheiben zu legen. Derartige Isolierplattensegmente weisen an ihren Seiten nutartige Ausnehmungen auf, so daß die Grundfläche der Segmente die Form eines Doppel-T einnimmt.

Einer weiteren Ausbildung der Erfindung zufolge besteht die Isolierplatte aus mit Stahlnadeln armierter Keramik, vorzugsweise aus Feuerfestbeton.

Zweckmäßigerweise ist die Kammwalze mit Kühlkanälen, insbesondere für Wasserkühlung, versehen.

Anhand der Zeichnung, in der ein Ausführungsbeispiel der Erfindung gezeigt ist, sollen die Erfindung sowie weitere vorteilhafte Ausgestaltungen und Verbesserung näher erläutert und beschrieben werden.

Es zeigt:

Fig. 1 einen Ausschnitt aus einem Induktions-Durchlauferwärmer in Aufsicht und

Fig. 2 den Ausschnitt eines Induktions-Durchlauferwärmers in Seitenansicht längs der Schnittlinie II-II aus Fig.1.

Der dargestellte Teil des Induktions-Durchlauferwärmers besteht aus zwei Induktionsspulen 10,11 und einem zwischen den Induktionsspulen 10,11 befindlichen Zwischenraum 12. In dem Zwischenraum 12 ist eine Tragwalze angeordnet, die als Kammwalze 13 ausgebildet ist. Die Kammwalze 13 besteht aus einer durchgehenden Welle 14, auf der in gleichmäßigen Abständen Scheiben 15 angeordnet sind.

Die Spulen 10,11 weisen jeweils eine Durchtrittsöffnung 16,17 auf, durch die das stangenförmige Material 18, beispielsweise eine Bramme, gefördert wird. Das stangenförmige Material 18 rollt auf den Scheiben 15 der Kammwalze 13 ab und wird durch diese getragen.

Die Kammwalze 13 enthält in ihrer Welle 14 axiale Kühlkanäle 19, die durch ein Kühlmedium, vorzugsweise Wasser, durchströmt werden.

Der Zwischenraum 12 zwischen den beiden Induktionsspulen 10,11 ist durch eine obere Isolierabdeckung 20 und zwei seitliche Isolierabdeckungen 21,22 abgedeckt. Ferner ist eine Wärmeisolierung zwischen der Welle 14 der Kammwalze 13 und der Transportbahn 23 des stangenförmgen Materials 18 angeordnet. Diese besteht aus einer Vielzahl von Isolierplattensegmenten 24. Die Isolierplattensegmente 24 liegen auf Leisten 25,26 auf, die an den einander zugewandten Stirnseiten der Induktionsspulen 10,11 befestigt sind.

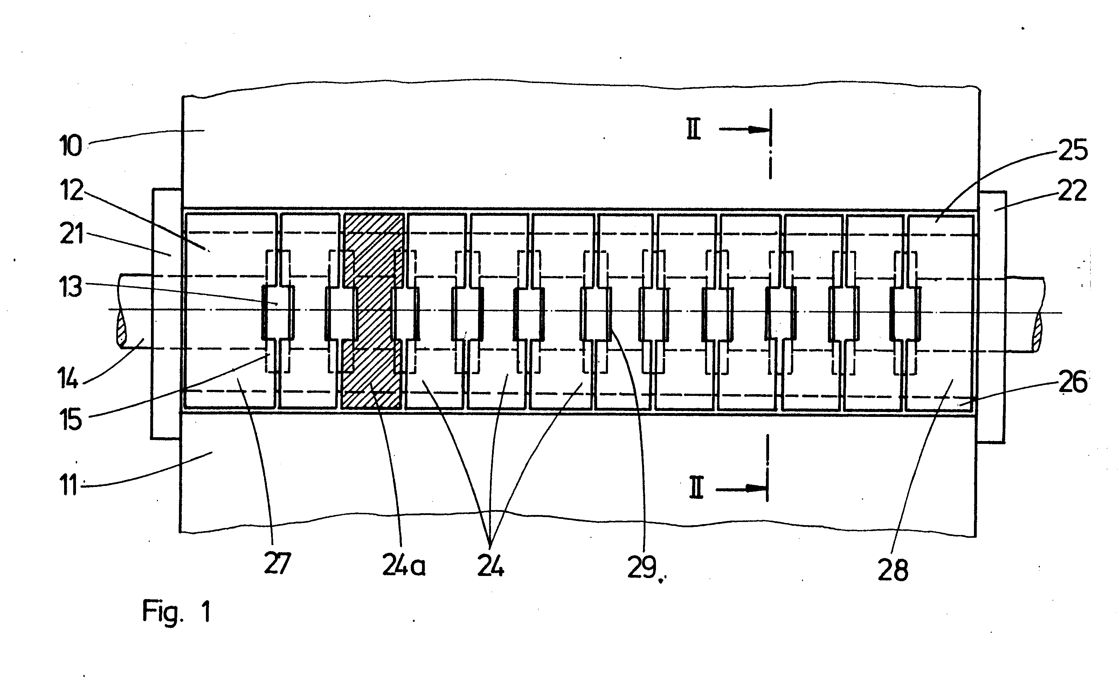

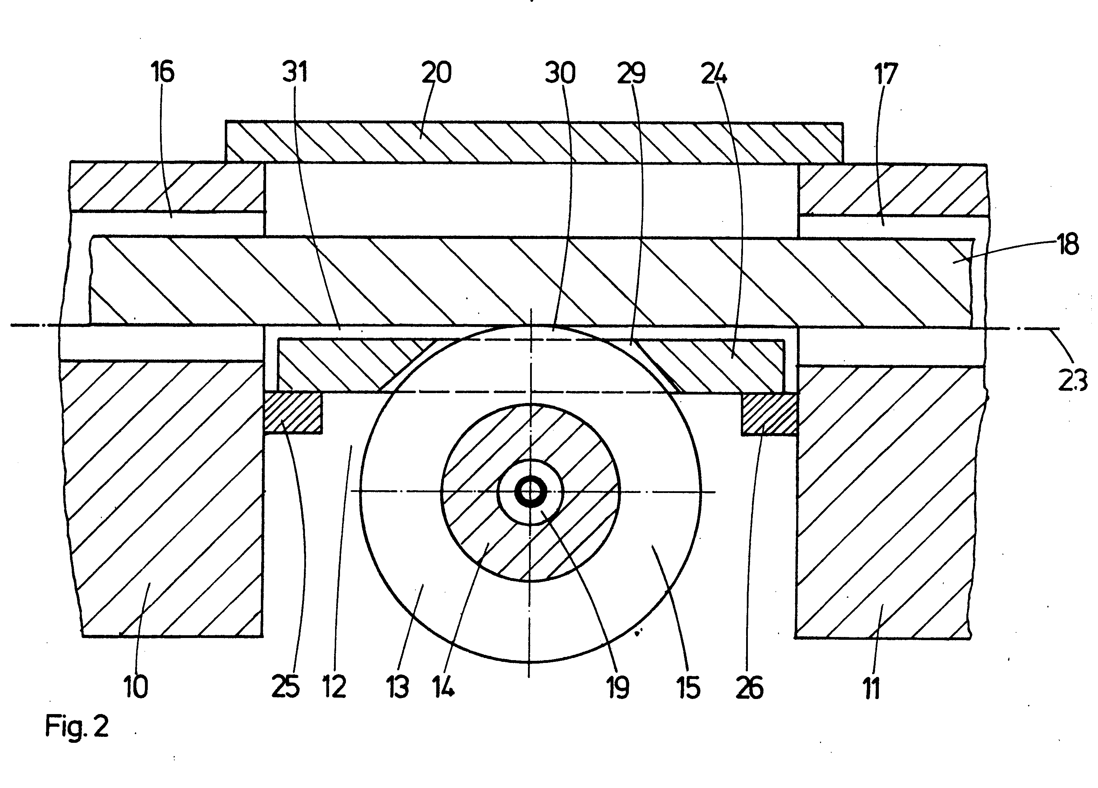

Die Länge L der Isolierplattensegmente 24 ist in etwa gleich dem Abstand zwischen den beiden Induktionsspulen 10,11. Ihre Breite B ist in etwa gleich dem Scheibenabstand der Kammwalze 13. Bis auf die beiden äußeren Isolierplattensegmente 27,28 weisen alle Isolierplattensegmente 24 an ihren beiden Seitenkanten in Aufsicht betrachtet rechteckige Ausnehmungen 29 auf (siehe Fig. 1), die sich nach unten hin keilförmig erweitern (siehe Fig. 2). Durch die Ausnehmungen 29 jeweils zweier benachbarter Isolierplattensegmente 24 ragt der obere Teil jeweils einer Scheibe 15. Das obere Segment 30 des Scheibe 15 ragt über die Isolierplattensegmente 24 hinaus, so daß zwischen den Isolierplattensegmenten 24 und der Transportbahn 23 ein Zwischenraum 31 verbleibt.

Zur Verdeutlichung des Aufsichtprofils in Fig. 1 ist ein Isolierplattensegment 24a schraffiert gezeichnet. Ferner ist in Fig. 1 die Isolierabdeckung 20 nicht mit eingezeichnet, da sonst die darunterliegenden Isolierplattensegmente 24, 24a, 27,28 nicht sichtbar wären.

**Ansprüche**

1. Wärmeisolierung für einen Induktions-Durchlauferwärmer für stangenförmiges Material, insbesondere für Brammen, wobei der Induktions-Durchlauferwärmer wenigstens zwei Induktionsspulen mit wenigstens einer zwischen zwischen den Spulen angeordeten Tragwelle oder -walze enthält, dadurch gekennzeichnet, daß die Tragwelle oder -walze als Kammwalze (13) ausgebildet ist, daß zwischen der Welle (14) der Kammwalze (13) und der Transportbahn (23) des stangenförmigen Materials (18) wenigstens eine Isolierplatte (24,24a,27,28) angeordnet ist, und daß die Isolierplatte (24,24a,27,28) Ausnehmungen (29) aufweist, durch die Segmente (30) der Scheiben (15) der Kammwalze (13) nach oben herausragen.

2. Wärmeisolierung nach Anspruch 1, dadurch gekennzeichnet, daß die Isolierplatte (24,24a, 27,28) auf an den Induktionsspulen (10,11) befestigten Leisten (25,26) aufliegt.

3. Wärmeisolierung nach Anspruch 2, dadurch gekennzeichnet, daß eine Leiste durch eine an der Induktionsspule angeformte Stufe gebildet ist.

4. Wärmeisolierung nach einem der Ansprüche 1 bis 3, dadurch gekennzeichnet, daß die Isolierplatte (24,24a,27,28) segmentartig ausgebildet ist, wobei die Segmentlänge (L) in etwa gleich dem Abstand zwischen den Induktionsspulen (10,11) ist und die Segmentbreite (B) in etwa gleich dem Scheibenabstand der Kammwalze (13) ist.

5. Wärmeisolierung nach einem der Ansprüche 1 bis 4, dadurch gekennzeichnet, daß die Trennungslinie zwischen zwei aneinanderliegenden Segmenten (24,24a,27,28) in etwa in Zahnmitte der Kammwalzenscheiben (15) liegt.

6. Wärmeisolierung nach einem der Ansprüche 1 bis 5, dadurch gekennzeichnet, daß die Isolierplatte (24,24a,27,28) aus mit Stahlnadeln armierter Keramik besteht.

7. Wärmeisolierung nach einem der Ansprüche 1 bis 6, dadurch gekennzeichnet, daß die Isolierplatte (24,24a,27,28) aus Feuerfestbeton gefertigt ist.

8. Wärmeisolierung nach einem der Ansprüche 1 bis 7, dadurch gekennzeichnet, daß die Kammwalze (13) mit Kühlkanälen (19), insbesondere für Wasserkühlung, versehen ist.

Fig. 1

Fig. 2